Europäisches Patentamt

European Patent Office

Office européen des brevets

(11) Publication number: **0 215 675**
**A1**

# (12) EUROPEAN PATENT APPLICATION

(21) Application number: **86307147.8**

(22) Date of filing: **17.09.86**

(51) Int. Cl.⁴: **F 16 B 13/00**
**B 21 D 53/36**

(30) Priority: **18.09.85 GB 8523099**

(43) Date of publication of application:
**25.03.87 Bulletin 87/13**

(84) Designated Contracting States:
**AT BE CH DE FR GB IT LI LU NL SE**

(71) Applicant: **BENJAMIN PRIEST LIMITED**
**Priest House Priest Street P.O. Box No. 38 Cradley Heath**
**Warley West Midlands B64 6JW (GB)**

(72) Inventor: **Pulsford, William James**
**5, Gattery Lane**
**Brixham South Devon, TQ5 0HE (GB)**

(74) Representative: **Russell, Paul Sidney et al**
**Barker, Brettell & Duncan 138 Hagley Road Edgbaston**
**Birmingham B16 9PW (GB)**

(54) **Spring tension pins.**

㊾ A non-interlocking spring tension pin comprises a wound leaf (10) which extends about the axis of the pin for substantially one full turn or more, an endmost portion of the leaf forming a tongue (17) which is stepped radially inwards by a distance not less than the thickness of the leaf. Preferably the leaf extends for a little more than one full turn in order that an overlap is created by the tongue (17) even in the relaxed condition of the pin. Alternatively a spiral-type pin can be formed in which instead of forming a short overlap the leaf extends through the major part of a second full turn.

FIG.1

EP 0 215 675 A1

# Description

## SPRING TENSION PINS

This invention is concerned with improvements in or relating to spring tension pins. Such engineering fastening pins are very well known, being in essence resiliently radially compressible tubular dowel pins. Very commonly the pins are formed as a wound leaf of spring steel sheet, though mild steel and non-ferrous metals (e.g. brass and copper) are also used. A well known United Kingdom manufacturer of such pins is G. E. Bissell & Co. who for many years have marketed their products under the trade mark BISSELL.

Perhaps the best known form of spring tension pin is one of a plain cylindrical form which is slotted longitudinally; the slot provides for a reduction in cross-section when the pin is radially compressed upon being driven slightly oversize into a drilled hole, resilient contraction of the pin being accommodated by a corresponding reduction in the slot gap.

A problem can arise with such slotted pins in automatic feeding, and that is that the pins tend to become interlocked with one another when thrown together loosely in bulk. This problem arises from the fact that the pin wall thickness may be less than the slot gap, and is aggravated by end chamfering of the pin which thins the wall at the pin ends. Various measures have been taken, or proposed, to deal with the problem including (1) permanently closing the slot gap at the ends of the pin by reducing the pin diameter locally (2) reducing the slot gap to just under the thickness of the pin wall material (3) reducing the pin diameter, and (4) providing lugs and recesses which in effect divert the slot locally adjacent to the ends of the pin, leaving only a very short slot length at each end of the pin at which interlocking can occur. However, such solutions may affect adversely the operating performance of the pin and/or only partly solve the interlocking problem.

This problem is also addressed by the disclosure of U.K. patent specification No. 1 164 060. With the object, it is said, of producing a solution involving as few working operations as possible in making the pin, it is there proposed to fold a strip of springy material through 180° and then to roll up the two-layer length of strip so formed. In so rolling the pin a layer shift occurs between the two layers. The distance between the fold and the opposite longitudinal edge of the outer layer defines the width of the slot gap. The longitudinal edge of the other (inner) layer becomes projected beyond the edge of the outer layer and so forms a tongue which covers the slot to prevent entry of another pin wall into the slot. However, the initial folding operation means an undesirable extra manufacturing step.

It is an object of the present invention to provide an improved construction of non-interlocking tension pin.

The invention provides in one of its aspects a spring tension pin comprising a wound leaf which from an axially extending edge portion thereof extends substantially one full turn or more about the axis of the pin, an endmost portion of the first full turn of the leaf being stepped radially inwards by a distance not less than the thickness of the leaf at said edge portion.

Such a pin construction can provide a tension pin having similar performance characteristics to a conventional slotted pin but in which the inwardly stepped portion of the leaf provides a tongue bridging the slot to prevent interlocking between two such pins. Preferably the leaf extends for a little more than one full turn, in order to create an overlap with said edge portion even in the relaxed condition of the pin.

Furthermore, the leaf may be of greater length (in the direction of coiling) to extend along at least the major part of a second full turn, to provide a pin of a spiral type for greater shock resistance and shear strength. Tension pins of a spiral type are well known, one such pin being described, for example, in U.S. patent specification No. 2 737 843. However, known spiral pins are simply coiled, and present the disadvantage of having a protruding edge (at the outer end of the coiled leaf) extending along the length of the pin. A spiral-type pin can, in accordance with the present invention, present a more truly circular cross-section, without such a protruding edge.

There now follows a detailed description, to be read with reference to the accompanying drawings, of two spring tension pins which illustrate the invention by way of example.

In the accompanying drawings:

Figure 1 is a perspective view of a non-interlocking tension pin having similar performance characteristics to a conventional slotted pin, end chamfering of the pin being omitted from the illustration for clarity;

Figure 2 is an end view of the pin shown in Figure 1;

Figure 3 is a perspective view of a spiral type of tension pin, end chamfering again being omitted; and

Figure 4 is an end view of the pin shown in Figure 3.

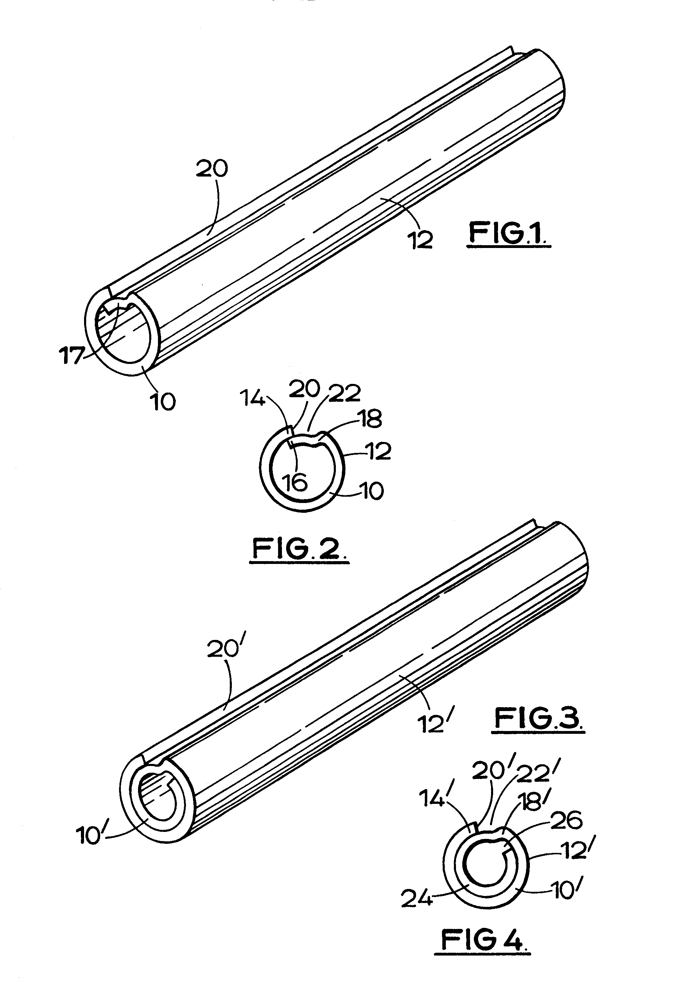

The non-interlocking spring tension pin illustrated by Figures 1 and 2 is formed in a largely conventional manner by means of press tools from, for example, high quality carbon spring steel or corrosion resistant steel EN56D. The pin is formed by rolling up a leaf 10 of sheet steel, the wound leaf presenting a cylindrical outer surface 12 of the tubular pin so constructed. To provide the pin with chamfered ends, for a lead-in in entry to a hole in use, edges of the leaf may be chamfered (before or after winding) as is well known in the manufacture of conventional cylindrical slotted pins.

Whereas in forming a conventional slotted tension pin a leaf would be wound to complete most but not all of a full turn about the pin axis, leaving a gap between opposed edge faces of the leaf to permit radial contraction of the pin, in forming the pin shown in Figures 1 and 2 a slightly longer leaf is wound (i.e. to form the same nominal diameter of pin) to create an overlap between radially outer 14 and inner 16 axially-extending edge portions of the leaf. As can be seen from the drawings, the leaf is formed with an endmost portion (i.e. endmost in the direction of coiling, and not endmost axially of the finished pin) in the form of a tongue 17 which is stepped radially inwards by a distance substantially equal to (but not less than) the thickness of the leaf. The leaf is of uniform thickness throughout, except where it is chamfered at the pin ends. The step is indicated by the numeral 18 in the drawings. The tongue 17 of the leaf is of a curvature substantially to match with its outside surface that of the inside surface of the edge portion 14 with which it overlaps.

In order to ensure that no interlocking between pins can occur, bearing in mind that the leaf thickness at the ends of the pin may be greatly reduced by chamfering, the leaf 10 must be of sufficient coiling length to complete not significantly less than one full turn, inwards about the pin axis, from an axially extending edge face 20 of the outer edge portion 14. Preferably, as described above and as illustrated in the drawings, the leaf extends for slightly more than one full turn to create an overlap even in the relaxed condition of the pin. A gap 22 remains between the edge face 20 and the portion of leaf at the step 18, which gap can be of a similar width to the slot of a conventional slotted pin of similar performance, the tongue 17 of the leaf (beyond the step 18) serving to bridge the slot to prevent interlocking between pins. The step 18 extends throughout the length of the pin, the pin being of a uniform nominally circular outer cross-section throughout its length (considering alone the critical outermost surface 12 of the pin).

As illustrated by Figures 3 and 4, in an otherwise similar pin construction to that of Figures 1 and 2, the leaf may be of greater length (for a given outer diameter of the pin) to extend along at least a substantial part of a second full turn, so to provide a cylindrical pin of a spiral form. In Figures 3 and 4 the same reference numerals with the addition of a prime indicate portions of the pin corresponding with those of the pin described with reference to Figures 1 and 2. In this spiral pin that portion 24 of the leaf extending through part of a second full turn stops short of an inside surface of the step 18' in the first turn of the leaf, so leaving an internal gap 26 extending along the length of the pin.

## Claims

1. A spring tension pin comprising a wound leaf (10) which from an axially extending edge portion (14) extends about the pin axis, characterised in that the leaf extends substantially one full turn or more about the axis and an endmost portion (17) of the first full turn is stepped radially inwards (18) by a distance not less than the thickness of the leaf at said edge portion (14).

2. A pin according to claim 1 in which the leaf extends (16, 24) for more than one full turn in order to create an overlap with said edge portion (14) even in the relaxed condition of the pin.

3. A pin according to claim 2 which is of a spiral type, the leaf extending (24) along at least the major part of a second full turn.

FIG.1.

FIG.2.

FIG.3.

FIG 4.

| | **DOCUMENTS CONSIDERED TO BE RELEVANT** | | EP 86307147.8 |
|---|---|---|---|

| Category | Citation of document with indication, where appropriate, of relevant passages | Relevant to claim | CLASSIFICATION OF THE APPLICATION (Int Cl.4) |
|---|---|---|---|
| X,D | GB - A - 1 164 060 (WILHELM HEDT-MANN K.G.) <br> * Fig. 1,4; page 2 * | 1,2 | F 16 B 13/00 <br><br> B 21 D 53/36 |
| D,A | US - A - 2 737 843 (HERMAN KOEHL) <br> * Fig. 1-3; claim 1 * | 1,3 | |

TECHNICAL FIELDS
SEARCHED (Int. Cl.4)

F 16 B

B 21 D

The present search report has been drawn up for all claims

| Place of search | Date of completion of the search | Examiner |
|---|---|---|
| VIENNA | 24-11-1986 | HEIN |